# EUROPÄISCHE PATENTSCHRIFT

(11) **EP 2 128 957 B1**
(45) Veröffentlichungstag und Bekanntmachung des Hinweises auf die Patenterteilung: **05.03.2014**
(21) Anmeldenummer: 09006693.7
(22) Anmeldetag: 19.05.2009
(51) Int. Cl.: H02J 4/00

(54) **Verfahren zum Betrieb eines Bordstromnetzes**
Method for operating an onboard power network
Procédé destiné au fonctionnement d'un réseau de bord

(30) Priorität: 30.05.2008 DE 102008026246
(43) Veröffentlichungstag der Anmeldung: 02.12.2009
(73) Patentinhaber: ThyssenKrupp Marine Systems GmbH, 24143 Kiel (DE)
(72) Erfinder: Dannenberg, Norbert Dipl.-Ing., 23628 Krummessee (DE)
(74) Vertreter: Vollmann, Heiko

(56) Entgegenhaltungen:
- EP-A1- 1 531 125
- EP-A2- 1 498 997
- WO-A1-2006/089904
- JP-A- 2008 079 436

## Beschreibung

Die Erfindung betrifft ein Verfahren zum Betrieb eines von Brennstoffzellen gespeisten Bordstromnetzes eines Unterseeboots sowie ein Bordstromnetz eines Unterseebootes.

Es zählt zum Stand der Technik, das Bordstromnetz eines Unterseebootes über eine Brennstoffzellenanlage mit elektrischer Energie zu versorgen. Im Normalbetrieb sind dabei zusätzliche Energiespeicher, etwa in Gestalt einer Hauptbatterie, an das Bordstromnetz angeschlossen. Über diese Energiespeicher kann eine sprunghaft ansteigende Belastung der Brennstoffzellenanlage vermieden werden. So kann das Bordstromnetz bei einer stark ansteigenden Netzlast zusätzlich aus den Energiespeichern mit elektrischer Energie versorgt werden. Das Dokument EP-A-1498997 offenbart ein Bordnetz gemäß des Standes der Technik.

Sind jedoch die elektrischen Energiespeicher, beispielsweise Hauptbatterien und Pufferbatterien, erschöpft oder ausgefallen, so muss die Brennstoffzellenanlage allein die Energieversorgung übernehmen. Das Unterseeboot bewegt sich dann zumeist in Schleichfahrt. Dazu muss jedoch die Belastung der Brennstoffzellenanlage manuell gesteuert werden, um eine hinreichende Energieversorgung zu gewährleisten. Insbesondere müssen durch manuellen Eingriff größere Laständerungen vermieden werden. Es kann jedoch möglich oder erforderlich sein, dass sich bestimmte an das Bordstromnetz angeschlossene Aggregate automatisch zuschalten und einen stabilen Betrieb der Anlage gefährden.

Eine zu schnell bzw. zu stark ansteigende Belastung der Brennstoffzellenanlage hätte eine instabile und ausfallträchtige Energieversorgung zur Folge. So sammeln sich in den Brennstoffzellen der Anlage bei einem zu schnellen Belastungsanstieg Verbrennungsprodukte wie beispielsweise Wasser, welche nicht hinreichend schnell aus den Zellen abgeführt werden können. Dies kann zu einem Einbrechen der Einzelzellenspannungen führen, sodass die gesamte Anlage zur Stromversorgung geschädigt wird oder gar ausfällt.

Vor diesem Hintergrund ist es daher Aufgabe der Erfindung, ein verbessertes Verfahren zum Betrieb eines von Brennstoffzellen gespeisten Bordstromnetzes eines Unterseebootes zu schaffen, welches einen stabilen und ausfallsicheren Betrieb der Brennstoffzellenanlage einerseits und eine zumindest kurzzeitig hohe Netzlast zulässt. Ferner ist es Aufgabe der Erfindung, eine Vorrichtung zur Durchführung dieses Verfahrens zu schaffen.

Diese Aufgabe wird erfindungsgemäß durch ein Verfahren mit den in Anspruch 1 angegebenen Merkmalen sowie durch eine Vorrichtung mit den in Anspruch 5 angegebenen Merkmalen gelöst. Vorteilhafte Ausgestaltungen sind in den Unteransprüchen, der nachfolgenden Beschreibung und den Zeichnungen angegeben.

Bei dem erfindungsgemäßen Verfahren zum Betrieb eines von Brennstoffzellen gespeisten Bordstromnetzes eines Unterseeboots wird dann, wenn die Netzlast über einen bestimmten Grenzwert hinaus ansteigt oder der Netzlastanstieg eine bestimmte Geschwindigkeit übersteigt, die durch den Propellermotor bedingte Netzlast entsprechend vermindert, abgestellt oder der Propellermotor als Generator betrieben.

Der Propellermotor, welcher zum Antrieb des Unterseebootes an das Bordstromnetz angeschlossen ist, dient dabei als einstellbare Last. Zum einen kann die durch den Propellermotor bedingte Netzlast vermindert oder ganz abgestellt werden. Darüber hinaus kann der Propellermotor allerdings auch zeitweise als Energiequelle arbeiten. Sowohl der Rotor des Propellermotors als auch das sich durch das Wasser bewegende Unterseeboot enthalten eine hohe Menge Bewegungsenergie. Ein Teil dieser Bewegungsenergie kann als elektrische Energie zurück in das Bordstromnetz des Unterseebootes gespeist werden, wenn der Propellermotor als Generator betrieben wird. Auf diese Weise kann die durch den Propellermotor bedingte Netzlast über einen weiten Bereich eingestellt werden. So kann diese Netzlast verringert, abgestellt oder sogar negativ werden. Über diese einstellbare Last können die Anstiege der Netzlast auch dann kompensiert werden, wenn kein zusätzlicher elektrischer Speicher im Bordstromnetz zur Verfügung steht.

Zweckmäßigerweise wird die Kompensation des Netzlastanstiegs durch die einstellbare, durch den Propellermotor bedingte Netzlast so durchgeführt, dass die Belastung der Brennstoffzellen bzw. die Geschwindigkeit des Belastungsanstiegs der Brennstoffzellen einen ausfallsicheren und stabilen Betrieb der Brennstoffzellenanlage gewährleistet. Das erfindungsgemäße Verfahren ermöglicht daher eine stabile und ausfallsichere Speisung eines Bordstromnetzes ohne den Bedarf weiterer zusätzlicher elektrischer Speicher durch eine Brennstoffzellenanlage. Ein weiterer Vorteil des erfindungsgemäßen Verfahrens besteht darin, dass es sich bei Verwendung steuer- und regelungstechnischer Schaltkreise automatisieren lässt. Damit werden insbesondere im Notfallbetrieb keine personellen Ressourcen zum Betrieb der Brennstoffzellenanlage gebunden.

Der generatorische Betrieb des Propellermotors verringert den Vortrieb des Unterseebootes dabei nur unwesentlich, da der Propellermotor in der Regel in verhältnismäßig kurzer Zeit nach dem generatorischen Betrieb die vormals eingestellte Drehzahl wieder erreicht. Ohnehin fährt das Unterseeboot bei alleiniger Energieversorgung durch die Brennstoffzellenanlage typischerweise in Schleichfahrt.

Hinreichend kleine Lastschwankungen allerdings können von einer Brennstoffzellenanlage störungsfrei abgedeckt werden. Vorzugsweise wird daher die Entlastung der Brennstoffzellenanlage durch den Propellermotor erst ab einer je nach Bauart der verwendeten Brennstoffzellenanlage festzulegenden Lastschwankung vorgenommen. Dadurch wird ein gleichmäßiger Betrieb des Propellermotors gewährleistet. Weiterhin vorteilhaft lässt sich das erfindungsgemäße Verfahren auch bei bereits bestehenden Bordstromnetzen einsetzen. Diese sind daher leicht zum Einsatz dieses Verfahrens aufrüstbar. Insbesondere bei einer solchen Brennstoffzellenanlage, bei welcher die Brennstoffzelle direkt mit der Fahrschiene verschaltet ist, lässt sich das Verfahren vorteilhaft auch einsetzen bei Übergängen der Brennstoffzelle zwischen Normalbetrieb, Leerlaufbetrieb und Ladebetrieb, selbst wenn die Brennstoffzelle dabei ohne elektrischen Pufferspeicher betrieben wird. Ergänzend können bei dem erfindungsgemäßen Verfahren auch weitere Verbraucher, die in ihrer Leistungsaufnahme gesteuert werden können und dabei den Anlagenbetrieb nicht maßgeblich beinträchtigen, zur Reduktion der Netzlast bzw. zur Reduktion der Geschwindigkeit des Netzlastanstieges verwendet werden.

Bevorzugt wird in dem Verfahren die durch den Propellermotor bedingte Netzlast dergestalt vermindert bzw. die durch den als Generator betriebenen Propellermotor bedingte Netzversorgung dergestalt erhöht, dass die Netzlast bzw. die Geschwindigkeit des Netzlastanstieges auf den Grenzwert oder auf einen kleineren Wert abgesenkt wird. Beispielsweise kann die durch den Propellermotor bedingte Netzlast so vermindert werden, dass die Netzlast bzw. die Geschwindigkeit des Netzlastanstiegs auf einen Sollwert, welcher kleiner oder gleich dem Grenzwert ist, gesenkt wird. Es kann aber auch die durch den generatorisch betriebenen Propellermotor bedingte Netzversorgung zur Regelung auf diesen Sollwert entsprechend erhöht werden.

In einer weiter bevorzugten Ausgestaltung wird bei dem Verfahren in elektrischen Kapazitäten des Bordstromnetzes gespeicherte Energie zur Kompensation von grenzwertüberschreitenden Netzlasten genutzt, wenn zur Kompensation die durch den Propellermotor bedingte Netzlast aufgrund der Ansprechzeit des Propellermotors nicht hinreichend vermindert oder abgestellt werden kann bzw. der Propellermotor nicht hinreichend schnell generatorisch betrieben werden kann.

Gängige, von Brennstoffzellenanlagen gespeiste Bordstromnetze von Unterseebooten weisen regelmäßig eine Vielzahl von kapazitiv wirkenden Schaltungsteilen, insbesondere von Kondensatoren auf. Beispielsweise finden sich Kapazitäten in Bordnetzumformern, Wechselrichtern oder Stromstellern der Brennstoffzelle oder des Propellermotors. Diese ohnehin im Bordstromnetz eines Unterseebootes vorhandenen Kapazitäten können als zusätzliche Energiespeicher zur schnellen Kompensation von grenzwertüberschreitenden Netzlasten benutzt werden, wenn eine Kompensation durch geeignete Änderungen der durch den Propeller bedingten Netzlast nicht hinreichend schnell erfolgen kann. Beispielsweise kann es geschehen, dass Änderungen der Netzlast so schnell erfolgen, dass durch die Netzlast bzw. durch die Geschwindigkeit des Anstieges der Netzlast der Grenzwert bereits in einer Zeitspanne überschritten wird, in welcher die aktuelle Netzlast bzw. die Geschwindigkeit des aktuellen Netzlastanstiegs noch ermittelt wird. Auch kann im Einzelfall die Ansprechzeit des Propellermotors eine hinreichend schnelle Kompensation von grenzwertüberschreitenden Netzlasten verhindern. In solchen Fällen können die Kapazitäten des Bordnetzes kurzfristig die erforderliche Energie zur Kompensation bereitstellen, indem sie ihre gespeicherte Energie ins Bordstromnetz speisen.

Vorteilhaft wird der Grenzwert für die Netzlast und/oder die Geschwindigkeit der Änderung der Netzlast aufgrund von Betriebsparametern der Brennstoffzelle angepasst. In dieser Ausgestaltung können somit auch brennstoffzelleninterne Störungen berücksichtigt bzw. ausgeglichen werden. Vorteilhaft wird damit die Zuverlässigkeit der Anlage weiter gesteigert.

Das erfindungsgemäße Bordstromnetz eines Unterseeboots zur Durchführung des erfindungsgemäßen Verfahrens weist Brennstoffzellen zur Netzspeisung sowie Steuermittel auf. Diese Steuermittel sind zum Vermindern der durch den Betrieb des Propellermotors bedingten Netzlast ausgebildet für den Fall des Überschreitens eines bestimmten Grenzwertes für die Netzlast und/oder die Geschwindigkeit des Netzlastanstieges. Weiter bevorzugt sind bei dem Bordstromnetz Steuermittel vorgesehen, welche zum Abstellen der durch den Betrieb des Propellermotors bedingten Netzlast im Falle des Überschreitens des Grenzwertes ausgebildet sind. Ferner bevorzugt sind bei dem Bordstromnetz Steuermittel vorgesehen, welche zum Betrieb des Propellermotors als Generator ausgebildet sind im Falle des Überschreitens des Grenzwertes.

Vorzugsweise sind bei dem Bordstromnetz Messmittel zur kontinuierlichen Erfassung der Netzlast vorgesehen, insbesondere Messmittel zur kontinuierlichen Erfassung der Verbrauchsströme und Spannungen. Bei einer derartigen Ausgestaltung kann entsprechend schnell auf einen sprunghaften Netzlastanstieg durch Änderung der durch den Propellermotor bedingten Netzlast reagiert werden.

Bei einer bevorzugten Ausführungsform des Bordstromnetzes sind Messmittel zur Erfassung der Betriebsparameter der Brennstoffzelle sowie eine Auswerte- und Steuereinheit zur kontinuierlichen Ermittlung eines Grenzwertes für die Netzlast und/oder die Geschwindigkeit des Netzlastanstiegs aufgrund der erfassten Betriebsparameter vorgesehen. Ferner bevorzugt sind Messmittel vorgesehen, mit welchen die in das Bordstromnetz eingespeiste Versorgungsleistung der Brennstoffzelle erfasst werden kann.

Die Erfindung ist nachfolgend anhand von in den Zeichnungen dargestellten Ausführungsbeispielen näher erläutert. Es zeigen:
- Fig. 1: ein Prinzipschaltbild eines von Brennstoffzellen gespeisten Bordstromnetzes eines Unterseeboots und
- Fig. 2: ein Prinzipschaltbild eines alternativen von Brennstoffzellen gespeisten Bordstromnetzes eines Unterseebootes.

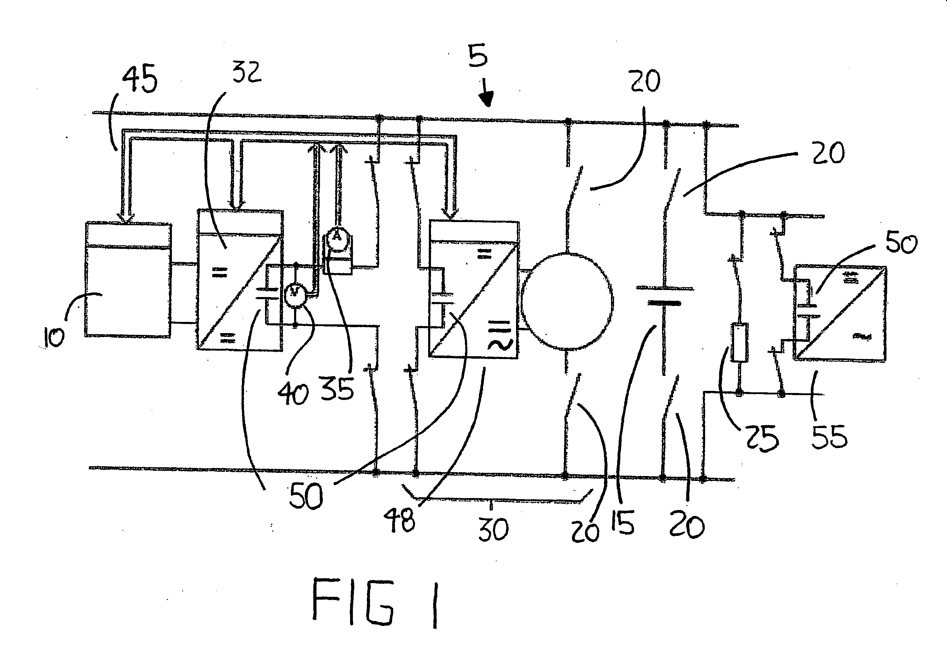

Das in Fig. 1 dargestellte Bordstromnetz 5 eines Unterseebootes wird von einer Brennstoffzellenanlage 10 mit elektrischer Energie gespeist. Als elektrischer Speicher dient grundsätzlich eine Fahrbatterie 15 der Hauptbatterie eines Unterseebootes, welche in der in Fig. 1 dargestellten Situation jedoch vom Bordstromnetz 5 elektrisch entkoppelt ist, was in der Zeichnung durch die geöffneten elektrischen Schalter 20 in der Verbindung zwischen Fahrbatterie 15 und Bordstromnetz 5 verdeutlicht ist. Damit verfügt das Bordstromnetz über keine elektrischen Speicherbatterien zur Kompensation von Leistungsschwankungen.

Das Bordstromnetz 5 versorgt zum einen Bordnetzverbraucher 25 mit elektrischer Energie. Zum anderen ist an das Bordstromnetz 5 auch ein Propellermotor 30 als weitere Last angeschlossen. Die Brennstoffzellenanlage 10 ist in dieser Ausgestaltung über einen Gleichstromsteller 32 mit dem Bordstromnetz 5 verbunden, welcher die Ausgangsspannung der Brennstoffzellenanlage 10 geeignet an das Bordstromnetz 5 anpasst. Zur Ermittlung der von der Brennstoffzellenanlage 10 in das Bordstromnetz 5 eingespeisten Leistung sind an den mit dem Bordstromnetz 5 verbundenen Ausgängen des Gleichstromstellers 32 ein Strommesser 35 und ein Spannungsmesser 40 angeschlossen. Die durch den Strommesser 35 und durch den Spannungsmesser 40 ermittelten Strom- und Spannungswerte werden als Eingangssignale in einen Mess- und Steuerbus 45 eingespeist. Eine Auswerte- und Steuereinheit (in den Zeichnungen nicht dargestellt) ermittelt die Differenz der von der Brennstoffzelle 10 gelieferten oder lieferbaren elektrischen Leistung und der von den Bordnetzverbrauchern 25 und der durch den Propellermotor 30 bedingten Last geforderten elektrischen Leistung. Solange sich die Last durch die Bordnetzverbraucher 25 nicht stark oder nur sehr langsam ändert, verschwindet diese Differenz im Wesentlichen, da der Reaktandenumsatz der Brennstoffzellenanlage 10 sowie die Belastung der Brennstoffzellenanlage 10 über den Gleichstromsteller 32 durch den Mess- und Steuerbus 45 der Gesamtlast 25, 30 angepasst werden.

Steigt jedoch die Belastung des Bordstromnetzes 5 durch Laständerungen der Bordnetzverbraucher 25 derart stark bzw. schnell, dass die Versorgungsleistung der Brennstoffzellenanlage 10 nicht stabil und ausfallsicher an die Netzlast angepasst werden kann, so steuert die Auswerte- und Steuereinheit über den Mess- und Steuerbus 45 den Wechselrichter oder den Anker- und Erregerstromsteller 48 des Propellermotors 30. Auf diese Weise wird die durch den Propellermotor 30 gebildete gesamte Netzlast geeignet angepasst. Dazu wird die durch den Propellermotor 30 bedingte Netzlast gerade soweit reduziert, dass die durch die Bordnetzverbraucher 25 und durch den Propellermotor 30 bedingte Netzlast gerade der nur langsam änderbaren Versorgungsleistung der Brennstoffzellenanlage 10 entspricht. Behält die durch die Bordnetzverbraucher 25 bedingte Last dauerhaft einen hohen Wert bei, so regelt die Auswerte- und Steuereinheit über den Mess- und Steuerbus 45 die Versorgungsleistung der Brennstoffzellenanlage 10 über die Steuerung des Reaktandenumsatzes und die Leistungsentnahme durch den Gleichstromsteller 32 aus der Brennstoffzellenanlage 10 entsprechend nach.

Dazu wird die Versorgungsleistung der Brennstoffzellenanlage 10 soweit erhöht, dass die erhöhte Last durch die Bordnetzverbraucher 25 und die ursprünglich durch den Propellermotor 30 bedingte Netzlast versorgt werden können. Damit kann beim Nachfahren der Brennstoffzellenanlage 10 die über den Mess- und Steuerbus 45 reduzierte Last des Propellermotors 30 wieder erhöht werden, sodass sie seiner ursprünglichen Last entspricht. Damit muss der Propellermotor 30 den durch die Bordnetzverbraucher 25 bedingten Lastsprung nur zeitweise kompensieren. Nach dieser Kompensation, also wenn die Brennstoffzellenanlage 10 mit ihrer Versorgungsleistung dem Netzlastanstieg gefolgt ist, kann der Propellermotor 30 mit seiner ursprünglichen Last betrieben werden.

Zur schnellen Kompensation eines Anstiegs der durch die Bordnetzverbraucher 25 bedingten Last kann der Propellermotor 30 in dem gezeigten Ausführungsbeispiel nicht nur lediglich in seiner Netzlast reduziert werden, sondern er kann erforderlichenfalls auch generatorisch arbeiten. Dabei bewegt sich das Unterseeboot aufgrund seiner großen Massenträgheit weiter fort. Das umgebende Wasser umströmt daher weiterhin den Propeller des Unterseeboots. Diese Umströmung versetzt den Propeller in Drehung. Die somit aufgenommene mechanische Leistung des Propellers wird in diesem Fall durch den Propellermotor 30 in elektrische Leistung umgewandelt und in das Bordstromnetz 5 eingespeist. Daher können mit dem Propellermotor 30 auch sehr starke Lastanstiege kompensiert werden. Die Last- bzw. Versorgungsleistungen des Propellermotors 30 sind dabei deutlich schneller änderbar als die Versorgungsleistung der Brennstoffzellenanlage 10.

Anstiege der Last durch die Bordnetzverbraucher 25, welche derart schnell erfolgen, dass sie durch eine Reduzierung der Last bzw. Erhöhung der Versorgungsleistung des Propellermotors 30 nicht kompensiert werden können, werden dabei von einer Mehrzahl von im Bordstromnetz 5 vorhandenen Kapazitäten kompensiert. Solche Kapazitäten finden sich etwa in Form von Kondensatoren 50 im Wechselrichter oder Anker- und Erregerstromsteller 48 des Propellermotors 30, im Bordnetzumformer 55 des Bordstromnetzes 5 und im mit der Brennstoffzellenanlage 10 verbundenen Gleichstromsteller 32. Zur Kompensation dieser besonders schnellen Anstiege der Netzlast befinden sich die Kondensatoren im geladenen Zustand. In diesem Ausführungsbeispiel kann dazu ein Spannungshub zweier Grenzspannungen genutzt werden, zwischen welchen das Bordstromnetz 5 betreibbar ist. So ist das dargestellte Bordstromnetz 5 mit Spannungen zwischen etwa 50% und 100% der Nennbetriebsspannung betreibbar. Zweckmäßigerweise betreibt man das Bordstromnetz 5 mit einer recht hohen Spannung im Bereich der Nennbetriebsspannung. Damit befinden sich die Kapazitäten zunächst in ihrem höchsten mit dem Spannungsbereich des Bordstromnetzes 5 verträglichen Ladezustand. Der zwischen etwa 50% und 100% der Nennbetriebsspannung bestehende Spannungshub und die damit einhergehende Energiedifferenz der in den Kondensatoren gespeicherten Energie steht damit für eine schnelle Leistungskompensation zur Verfügung.

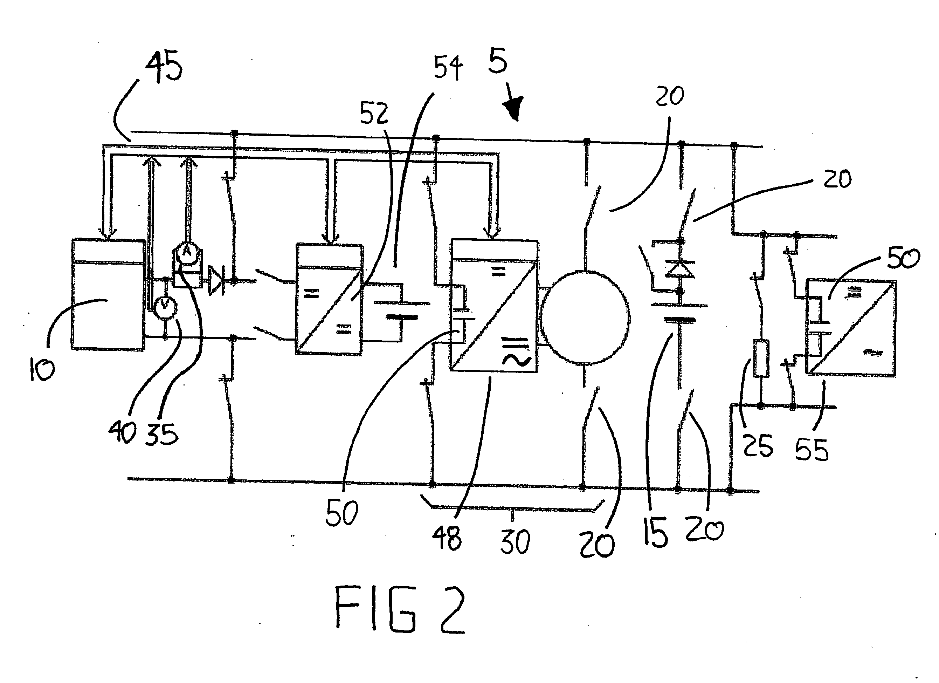

Das in Fig. 2 dargestellte Bordstromnetz eines Unterseebootes wird gleichfalls von einer Brennstoffzellenanlage 10 mit elektrischer Energie versorgt. Der elektrische Speicher in Form einer Fahrbatterie 15 einer Hauptbatterie eines Unterseebootes ist auch in diesem Ausführungsbeispiel vom Bordstromnetz 5 entkoppelt, wie dies durch die geöffneten elektrischen Schalter 20 dargestellt ist.

Das Bordstromnetz 5 versorgt die Bordnetzverbraucher 25 sowie den Propellermotor 30 mit elektrischer Energie. Auch in diesem Ausführungsbeispiel kann dabei die Bordstromnetzlast 25 starke bzw. schnelle Netzlastanstiege bewirken. Zur Erfassung der von der Brennstoffzellenanlage 10 in das Bordstromnetz eingespeisten Leistung sind an den direkt mit dem Bordstromnetz 5 verbundenen Ausgängen der Brennstoffzellenanlage 10 ein Strommesser 35 und ein Spannungsmesser 40 angeschlossen. Die vom Strommesser 35 und vom Spannungsmesser 40 erfassten Strom- bzw. Spannungswerte werden an den Mess- und Steuerbus 45 übermittelt. Damit kann eine Auswerte- und Steuereinheit (in der Zeichnung nicht dargstellt) die Differenz der von der Brennstoffzellenanlage 10 in das Bordstromnetz 5 einspeisten Leistung und der durch die Bordstromnetzlast 25 und durch den Propellermotor 30 bedingten Netzlast bestimmen.

Steigt die Netzlast bedingt durch die Bordstromnetzverbraucher 25 derart stark bzw. schnell an, dass die Versorgungsleistung der Brennstoffzellenanlage 10 nicht stabil und ausfallsicher an die gestiegene Netzlast angepasst werden kann, so wird über den Mess- und Steuerbus 45 der Wechselrichter oder Anker- und Erregerstromsteller 48 des Propellermotors 30 entsprechend gesteuert, sodass die durch den Propellermotor 30 bedingte Netzlast zur Kompensation vermindert wird. Falls zur Kompensation des Netzlastanstieges erforderlich, kann die durch den Propellermotor 30 bedingte Netzlast auch abgestellt bzw. der Propellermotor 30 generatorisch betrieben werden.

Um zusätzlich zu dieser schnellen Kompensation die Versorgungsleistung der Brennstoffzellenanlage 10 dauerhaft an eine gestiegene Netzlast anzupassen, wird der Reaktandenumsatz über den Mess- und Steuerbus 45 geeignet nachgestellt. Zudem wird die Netzeinspeisung der Brennstoffzellenanlage 10 angepasst, indem ein Gleichstromsteller 52, mittels welchem eine Pufferbatterie 54 an die Brennstoffzellenanlage 10 angeschlossen ist, die Belastung der Brennstoffzellenanlage 10 geeignet steuert. Auch in dieser gezeigten Ausgestaltung, insbesondere bei Ausfall des Gleichstromstellers 52 und/oder der Pufferbatterie 54, kompensiert also die Verringerung der durch den Propellermotor 30 bedingten Netzlast einen schnellen Anstieg der Last durch die Bordstromnetzverbraucher 25, während eine dauerhafte Leistungsanpassung über ein Nachfahren der Brennstoffzellenanlage 10 erfolgt. Dazu kann der Propellermotor 30 so betrieben werden, dass die durch den Propellermotor 30 bedingte Netzlast vermindert oder abgestellt wird bzw. die durch einen generatorisch betriebenen Propellermotor 30 bedingte Versorgungsleistung in das Bordstromnetz 5 eingespeist oder erhöht wird.

Ferner weist das Bordstromnetz 5 eine Mehrzahl von kapazitiven Elementen auf, welche schnelle bzw. starke Netzlastanstiege, die durch Änderungen der durch den Propellermotor 30 bedingten Netzlast bzw. Versorgungsleistung nicht kompensiert werden können, befriedigen. Dazu sind Kondensatoren 50 in dem Bordnetzumformer 55, dem Wechselrichter oder Anker- und Erregerstromsteller 48 des Elektromotors 30 sowie der Pufferbatterie 54 nutzbar.

### Bezugszeichenliste

- 5 -: Bordstromnetz
- 10 -: Brennstoffzellenanlage
- 15 -: Fahrbatterie (Hauptbatterie)
- 20 -: Schalter
- 25 -: Bordnetzverbraucher
- 30 -: Propellermotor
- 32 -: Gleichstromsteller (Brennstoffzellenanlage)
- 35 -: Strommesser
- 40 -: Spannungsmesser
- 45 -: Mess- und Steuerbus
- 48 -: Wechselrichter oder Anker- und Erregerstromsteller
- 50 -: Aus-/Eingangskapazitäten
- 52 -: Gleichstromsteller (Pufferbatterie)
- 54 -: Pufferbatterie
- 55 -: Bordnetzumformer

## Patentansprüche

1. Verfahren zum Betrieb eines von Brennstoffzellen (10) gespeisten Bordstromnetzes (5) eines Unterseebootes, bei dem dann, wenn die Netzlast über einen bestimmten Grenzwert hinaus ansteigt und/oder der Netzlastanstieg eine bestimmte Geschwindigkeit übersteigt, die durch den Propellermotor (30) bedingte Netzlast entsprechend vermindert, abgestellt oder der Propellermotor (30) als Generator betrieben wird.

2. Verfahren nach Anspruch 1, bei welchem die durch den Propellermotor (30) bedingte Netzlast dergestalt vermindert bzw. die durch den generatorisch betriebenen Propellermotor (30) bedingte Netzversorgung dergestalt erhöht wird, dass die Netzlast bzw. die Geschwindigkeit des Netzlastanstieges zumindest zeitweise auf den Grenzwert oder einen kleineren Wert abgesenkt wird.

3. Verfahren nach Anspruch 1 oder 2, bei welchem in elektrischen Kapazitäten (50) des Bordstromnetzes (5) gespeicherte Energie zur Kompensation von Grenzwert überschreitenden Netzlasten genutzt wird, wenn zur Kompensation die durch den Propellermotor (30) bedingte Netzlast aufgrund der Ansprechzeit des Propellermotors (30) nicht hinreichend schnell vermindert oder abgestellt werden kann bzw. der Propellermotor (30) nicht hinreichend schnell generatorisch betrieben werden kann.

4. Verfahren nach einem der Ansprüche 1 bis 3, bei welchem ein oberer Grenzwert für die Netzlast und/oder die Geschwindigkeit des Anstiegs der Netzlast aufgrund von Betriebsparametern der Brennstoffzelle (10) angepasst wird.

5. Bordstromnetz (5) eines Unterseebootes zur Durchführung des Verfahrens nach einem der vorangehenden Ansprüche, welches Brennstoffzellen (10) zur Netzspeisung aufweist und bei welchem Steuermittel (45) vorgesehen sind, welche zum Vermindern der durch den Betrieb des Propellermotors (30) bedingten Netzlast im Falle des Überschreitens eines bestimmten Grenzwertes für die Netzlast und/oder die Geschwindigkeit des Netzlastanstieges ausgebildet sind.

6. Bordstromnetz (5) nach Anspruch 5, bei welchem Steuermittel (45) vorgesehen sind, welche zum Abstellen der durch den Betrieb des Propellermotors (30) bedingten Netzlast im Falle des Überschreitens eines bestimmten Grenzwertes für die Netzlast und/oder die Geschwindigkeit des Netzlastanstieges ausgebildet sind.

7. Bordstromnetz (5) nach Anspruch 5 oder 6, bei welchem Steuermittel (45) vorgesehen sind, welche zum Betrieb des Propellermotors (30) als Generator im Falle des Überschreitens eines bestimmten Grenzwertes für die Netzlast und/oder die Geschwindigkeit des Netzlastanstieges ausgebildet sind.

8. Bordstromnetz (5) nach einem der Ansprüche 5 bis 7, bei welchem Messmittel (35,40) zur Erfassung der Betriebsparameter der Brennstoffzelle (10) vorgesehen sind und bei welchem eine Auswerteeinheit zur kontinuierlichen Ermittlung eines Grenzwertes für die Netzlast und/oder die Geschwindigkeit des Netzlastanstieges aufgrund der erfassten Betriebsparameter vorgesehen ist.

## Claims

1. Method for operating an on-board power system (5), fed by fuel cells (10), of a submarine, in which the system load brought about by the propeller motor (30) is correspondingly reduced or switched off or the propeller motor (30) is operated as a generator if the system load increases above a specific limiting value and/or the increase in the system load exceeds a specific speed.

2. Method according to claim 1, in which the system load brought about by the propeller motor (30) is reduced, or the system supply which is provided by the propeller motor (30) operated in generator mode is increased, in such a way that the system load or the speed of the increase in the system load is reduced at least temporarily to the limiting value or to a relatively small value.

3. Method according to claim 1 or 2, in which energy which is stored in electrical capacitors (50) of the on-board power system (5) is used to compensate system loads which exceed the limiting value if the system load brought about by the propeller motor (30) cannot be reduced or switched off sufficiently quickly for the purpose of compensation owing to the response time of the propeller motor (30), or the propeller motor (30) cannot be operated in generator mode sufficiently quickly.

4. Method according to one of claims 1 to 3, in which an upper limiting value for the system load and/or the speed of the increase in the system load is adapted on the basis of operating parameters of the fuel cell (10).

5. On-board power system (5) of a submarine for carrying out the method according to one of the preceding claims, which on-board power system (5) has fuel cells (10) for feeding the system, and in which control means (45) are provided which are designed to reduce the system load brought about by the operation of the propeller motor (30), if a specific limiting value for the system load and/or the speed of the increase in the system load is exceeded.

6. On-board power system (5) according to claim 5, in which control means (45) are provided which are designed to switch off the system load brought about by the operation of the propeller motor (30), if a specific limiting value for the system load and/or the speed of the increase in the system load is exceeded.

7. On-board power system (5) according to claim 5 or 6, in which control means (45) are provided which are designed to operate the propeller motor (30) as a generator if a specific limiting value for the system load and/or the speed of the increase in the system load is exceeded.

8. On-board power system (5) according to one of claims 5 to 7, in which measuring means (35, 40) are provided for measuring the operating parameters of the fuel cell (10), and in which on-board power system (5) an evaluation unit is provided for continuously determining a limiting value for the system load and/or the speed of the increase in the system load on the basis of the measured operating parameters.

## Revendications

1. Procédé destiné au fonctionnement d'un réseau de bord (5) d'un sous-marin, alimenté par des piles à combustible (10), dans lequel, lorsque la charge de réseau augmente au-delà d'une valeur limite déterminée et/ou lorsque l'augmentation de la charge de réseau dépasse une vitesse donnée, la charge de réseau liée au moteur d'hélice (30) est réduite en conséquence, ou coupée, ou bien le moteur d'hélice (30) fonctionne comme générateur.

2. Procédé selon la revendication 1, dans lequel la charge de réseau liée au moteur d'hélice (30) est réduite ou l'alimentation réseau liée au moteur d'hélice (30) fonctionnant comme générateur est augmentée de telle sorte que la charge de réseau ou la vitesse d'augmentation de la charge de réseau soit abaissée, au moins temporairement, à la valeur limite ou à une valeur plus faible.

3. Procédé selon la revendication 1 ou 2, dans lequel l'énergie stockée dans des capacités électriques (50) du réseau de bord (5) est utilisée pour compenser des charges de réseau dépassant la valeur limite, lorsque, pour la compensation, la charge de réseau liée au moteur d'hélice (30) ne peut pas être réduite ou coupée suffisamment rapidement ou bien lorsque le moteur d'hélice (30) ne peut pas fonctionner suffisamment rapidement comme générateur en raison du temps de réponse du moteur d'hélice (30).

4. Procédé selon l'une des revendications 1 à 3, dans lequel une valeur limite supérieure de la charge de réseau et/ou de la vitesse d'augmentation de la charge de réseau est adaptée en fonction de paramètres de fonctionnement de la pile à combustible (10).

5. Réseau de bord (5) d'un sous-marin pour la réalisation du procédé selon l'une des revendications précédentes, qui présente des piles à combustible (10) pour l'alimentation du réseau et dans lequel sont prévus des moyens de commande (45) conçus pour diminuer la charge de réseau liée au fonctionnement du moteur d'hélice (30) en cas de dépassement d'une valeur limite déterminée de la charge de réseau et/ou de la vitesse d'augmentation de la charge de réseau.

6. Réseau de bord (5) selon la revendication 5, dans lequel sont prévus des moyens de commande (45) conçus pour couper la charge de réseau liée au fonctionnement du moteur d'hélice (30) en cas de dépassement d'une valeur limite déterminée de la charge de réseau et/ou de la vitesse d'augmentation de la charge de réseau.

7. Réseau de bord (5) selon la revendication 5 ou 6, dans lequel sont prévus des moyens de commande (45) conçus pour le fonctionnement du moteur d'hélice (30) comme générateur en cas de dépassement d'une valeur limite déterminée de la charge de réseau et/ou de la vitesse d'augmentation de la charge de réseau.

8. Réseau de bord (5) selon l'une des revendications 5 à 7, dans lequel sont prévus des moyens de mesure (35, 40) pour détecter les paramètres de fonctionnement de la pile à combustible (10) et dans lequel est prévue une unité d'évaluation pour la détermination en continu d'une valeur limite de la charge de réseau et/ou de la vitesse d'augmentation de la charge de réseau en fonction des paramètres de fonctionnement détectés.
